# EUROPÄISCHE PATENTSCHRIFT

(11) **EP 2 136 052 B1**
(45) Veröffentlichungstag und Bekanntmachung des Hinweises auf die Patenterteilung: **23.05.2012**
(21) Anmeldenummer: 09156587.9
(22) Anmeldetag: 30.03.2009
(51) Int. Cl.: F02C 7/14, B64D 33/08

(54) **Turboproptriebwerk mit einer Vorrichtung zum Erzeugen eines Kühlluftstroms**
Turboprop engine comprising a device for creating a cooling air flow
Turbine à turbopropulseur dotée d'un dispositif de production d'un flux d'air de refroidissement

(30) Priorität: 20.06.2008 DE 102008028987
(43) Veröffentlichungstag der Anmeldung: 23.12.2009
(73) Patentinhaber: Rolls-Royce Deutschland Ltd & Co KG, 15827 Blankenfelde-Mahlow (DE)
(72) Erfinder: van der Woude, Matthijs, 15834 Rangsdorf (DE)
(74) Vertreter: Kronthaler, Wolfgang N.K.

(56) Entgegenhaltungen:
- EP-A- 0 514 119
- DE-A1- 19 524 731
- DE-A1- 19 524 733
- US-A- 2 487 842
- US-A- 2 625 009
- US-B1- 6 282 881

## Beschreibung

Die Erfindung betrifft ein Turboproptriebwerk mit einer Vorrichtung zum Erzeugen eines Kühlluftstroms und ein Verfahren zum Erzeugen eines Kühlluftstroms in der Triebwerksgondel des Turboproptriebwerks.

Seit vielen Jahren kommen in der Luftfahrt Turboprop-Gasturbinen (Propellerturbinen) zum Einsatz. Allgemein hat dieser Triebwerkstyp verstellbare Propellerblätter, um den Vortrieb am Boden umzukehren, bzw. die Turbine auch im Leerlauf ohne Vortriebkomponente laufen zu lassen und um bei jeder Geschwindigkeit die optimale Anstellung einzustellen.

Zur Kühlung des Triebwerks während des gesamten Drehzahlbereichs wird üblicherweise im hinteren Teil des Triebwerks fortwährend das in der Triebwerksgondel befindliche erwärmte Luftvolumen abgesaugt. Dies geschieht mittels einer Abgasejektordüse, die die kinetische Energie des Abgasstrahls des Kerntriebwerks nutzt. Die durch die Abgasejektordüse abgesaugte Luft wird über Lufteinlässe im vorderen Bereich des Triebwerks durch frische kühle Umgebungsluft als Kühlluft ersetzt. Die Kühlluft wird über offene Lufteinlässe in das Volumen zwischen Triebwerk und Triebwerksgondel eingeleitet und darin ausgeblasen.

Diese Kühlluft streicht auf ihrem Weg zur Abgasejektordüse an den durch den Kreisprozess des Kerntriebwerks erwärmten Triebwerksbauteilen vorbei und nimmt konvektiv Warme in sich auf. Dies verhindert die Überhitzung von begrenzt wärmefesten Kabelbäumen und anderen Bauteilen, die am Triebwerk und innerhalb der Triebwerksgondel installiert sind. Die Turbinengehäuse können auch mit einem Hitzeschild versehen sein, welcher in Verbindung mit der bereits genannten Abgasejektordüse die Funktion eines Ringspalts übernimmt, der im vorderen Kühlkanaleinlassbereich mit einem aerodynamisch optimierten Einlassmund (Bell-mouth) versehen werden kann.

Im Einlassmund wird die vorher mit relativ geringer Strömungsgeschwindigkeit am Triebwerk vorbei streichende Luft, in dem Ringspalt beschleunigt und kann somit noch mehr Wärme des Turbinengehäuses konvektiv aufnehmen, bevor sie durch die Abgasejektordüse am Ende des Triebwerks, mit den Turbinenabgasen vermischt, das Triebwerk verlässt.

Bei diesen Turboproptriebwerken funktioniert der beschriebene Kühlmechanismus im Fluge oder während größerer Lastfälle hervorragend, allerdings stellt der Bodenleerlaufbereich für gewöhnlich eine mehr oder weniger kritische Phase für die Kühlung des Triebwerks dar. Dies sind im wesentlichen Lastbereiche mit neutraler Propellerstellung (in Segelstellung) bei dem die das Triebwerk umgebende Luft keine kinetische Energie zur forcierten Einströmung in die Triebwerksgondel hat. Das Kühlprinzip ist rein auf die Funktion der Abgasejektordüse am Triebwerksaustritt angewiesen, die stetig ausreichend Luft aus der Gondel absaugt.

Da dieser Ejektor allerdings nur dann funktionireren kann, wenn ausreichend kinetische Energie des Abgasstrahls vorhanden ist, so dass der statische Druck in der Abgasejektordüse geringer ist als der statische Druck oder der Totaldruck in der Triebwerksgondel gibt es sowohl im Bodenleerlaufsbereich als auch bei Rückenwind bei Turboproptriebwerken häufig den Fall, dass sich die Druckverhältnisse umkehren können. Dies führt dann innerhalb weniger Sekunden dazu, dass heiße Abgase direkt über den Ejektorspalt oder bei Vorhandensein eines Ringspalts direkt in den Triebwerksgondelbereich gelangen können. Die Heißgase erhöhen die Umgebungslufttemperatur der begrenzt wärmefesten Kabelbäume und anderen in der Triebwerksgondel untergebrachten Bauteile sehr schnell, was in der Regel zur beschleunigten thermischen Alterung und dem frühzeitigen Versagen von Bauteilen führen wird. Je nach Triebwerkstyp können die Temperaturen schnell bis zu 500-700°C erreichen.

Meistens wird die Umkehrströmung durch die Vergrößerung der Propelleranstellung und Triebwerkleistungszunahme unterbunden, was aber im Bodenbetrieb zu höherem Treibstoffverbrauch führt, der unerwünscht ist.

Ein weitere Vorrichtung ist bekannt, bei der die Hochdruckverdichterzapfluft über mehrere Ejektoren in den oben genannten Ringspalt ausgeblasen wird, um die Hauptkühlströmung in diesem Ringspalt zur Abgasejektordüse am Ende des Triebwerks zu richten. Dies soll die mögliche Rückströmung von Heißgasen in die Triebwerksgondel verhindern.

Diese Vorrichtung soll eine Strömung im Ringspalt erzwingen, birgt aber dennoch die Gefahr, dass der statische Druck darin größer ist als in der Triebwerksgondel und sich dadurch die Strömung lokal umkehrt. Außerdem hat diese Lösung den großen Nachteil, viele zusätzliche Bauteile, wie Leitungsführungen zu den einzelnen Ejektoren im Ringspalt zu benötigen, was zu stark vergrößertem Gewicht führt. Weiterhin wird Hochdruckverdichterzapfluft benötigt, die dem Kreisprozess zusätzlich entzogen werden muss, was zu höherem Kraftstoffverbrauch am Boden führt.

Außerdem gibt es gemäß US 6,282,881 B1 die Anwendung der Nutzung von Hochdruckverdichterzapfluft bzw. von Verdichterzapfluft im Allgemeinen, die durch eine Ejektordüse in einen Luftführungskanal hinter den Getriebeölwärmetauscher ausgeblasen wird, um während des Bodenbetriebs die Kühlung des Getriebeöls zu verbessern.

Auch diese Vorrichtung bedient sich in erster Linie der Hochdruckverdichterzapfluft mit ebenfalls verringertem Wirkungsgrad des Triebwerks und damit höherem Kraftstoffverbrauch. Diese Vorrichtung bezieht sich aber rein auf die Verbesserung der Getriebeölkühlung, was aber die Gefahr der Überhitzung der Triebwerksgondel durch Umkehrströmung nicht löst.

Es sind ferner aus US 6,282,881 B1 und US 2,625,009 Turboproptriebwerke Vorrichtungen zum Erzeugen eines Kühlluftstromes bekannt, bei denen ebenfalls die Gefahr der Überhitzung, insbesondere im kritischen Bodenleerlaufbetrieb, besteht.

Der Erfindung liegt daher die Aufgabe zu Grunde, die Kühlung der Triebwerkskomponenten in der Triebwerksgondel auch im kritischen Bodenleerlaufbetrieb (kontrolliert oder auch unkontrolliert) zu verbessern, ohne dabei den (unerwünschten) Kraftstoffverbrauch zu erhöhen bzw. störend in den Kreisprozess des Triebwerkes einzugreifen.

Diese Aufgabe wird erfindungsgemäß mit einem Turboproptriebwerk mit einer Vorrichtung zum Erzeugen eines Kühlluftstroms nach Anspruch 1 gelöst, wobei der Ejektor innerhalb der Triebwerksgondel im vorderen Bereich des Turboproptriebwerkes und die Zapfluftleitung am Niederdruckverdichter angeordnet sind und wobei ein gesonderter Einlass in der Triebwerksgondel vorgesehen ist, der über mindestens eine Gebläsezuleitung zu mindestens einem Gebläse führt, von dem aus eine Gebläseaustrittsleitung zur Düse des Ejektors führt.

Weiterhin wird die Aufgabe mit einem Verfahren zum Erzeugen eines Kühlluftstroms in der Triebwerksgondel des Turboproptriebwerkes nach Anspruch 4 gelöst, wobei das Gebläse im Bodenleerlaufbetrieb Umgebungsluft aus dem gesonderten Einlass durch die Gebläsezuleitung saugt und durch die Gebläseaustrittsleitung in die Düse bläst.

Die durch die Düse des Ejektors in den Kühlluftführungskanal ausströmende Zapfluft reißt nach dem Ejektorprinzip kühle Umgebungsluft mit sich und bietet der Triebwerksgondel somit ausreichend kühle Mischluft zur Kühlung des Triebwerkes an, die im Gegensatz zu den Temperaturen von bis zu 500 bis 700°C (ohne Kühlung) deutlich kühler ist, nämlich unter 200°C. Die Mischtemperatur kann je nach Triebwerkstyp und dessen Niederdruckverdichtungsgrad ca. 130°C betragen.

Der Ejektor ermöglicht also eine sichergestellte verbesserte Kühlung im Bodenleerlaufbetrieb des Turboproptriebwerks, auch in Segelstellung der Propeller und bei Rückenwind. Die Erfindung bewirkt insgesamt einen verringerten Kraftstoffverbrauch am Boden, da die Propellerblattanstellung durch die Kühlungsverbesserung nicht mehr erforderlich ist. Es erfolgt also kein Eingriff in den Kreisprozess im Vergleich zu der Nutzung von Hochdruckverdichterzapfluft.

Außerdem wird der im vorderen Bereich des Triebwerks angeordnete Kühlluftkanal genutzt. Die Anordnung erfordert also nur einen geringen Aufwand der Nachrüstung, mit wenigen Bauteilen in der Triebwerksgondel und nur geringer Gewichtszunahme. Viele Gasturbinen, besonders Axialverdichtergasturbinen in Turboproptriebwerken, müssen im Leerlaufbetrieb einen gewissen Anteil der dem Hochdruckverdichter des Kerntriebwerks angebotenen, verdichteten Niederdruckverdichterluft über Zapfluftventile ungenutzt in die Atmosphäre abblasen. Dies geschieht ebenfalls, wenn eine Gasturbine von höherem Leistungsniveau verzögert wird, um zu vermeiden, dass es im Hochdruckverdichter zum Strömungsabriss beim Erreichen der Pumpgrenze kommt.

Erfindungsgemäß wird die vorhandene Zapfluft des Niederdruckverdichters je nach Notwendigkeit genutzt, um den Luftdruck innerhalb der Triebwerksgondel leicht oberhalb des statischen Druckes in der Abgasejektordüse zu erhöhen. Damit wird insbesondere im sonst kritischen Leerlaufbetrieb am Boden die Strömungsrichtung der Kühlluft in der Triebwerksgondel stabil zur Abgasejektordüse forciert. Die Rückführung der Zapfluft aus dem Niederdruckverdichter zurück in den Kreisprozess des Triebwerks führt außerdem zu einer Verringerung des Kraftstoffverbrauchs. In Turboproptriebwerken nach dem Stand der Technik wird dagegen die Zapfluft ungenutzt aus der Triebwerksgondel herausgeführt.

In der Erfindung ist ein gesonderter Einlass in der Triebwerksgondel vorgesehen, der über mindestens eine Gebläsezuleitung zu mindestens einem Gebläse führt, von dem aus eine Gebläseaustrittsleitung zur Düse des Ejektors führt.

Das Gebläse bläst dabei nur kühle Umgebungsluft (Frischluft) in die Triebwerkgondel ein. Diese wird über einen gesonderten Einlass angesaugt und in demselben Kühlluftführungskanal eingeblasen, der bereits bei bewegter Umgebungsluft und im Fluge Stauluft in die Triebwerksgondel leitet.

Die ejektorgestützte Strömung kommt nicht direkt durch die Zapfluft zustande, sondern nur durch den Luftstrom des Gebläses, der durch die Düse des Ejektors in den Kühlluftkanal eingeblasen wird. Durch die Strömungsgeschwindigkeit der Gebläseluft kommt in dem Kühlluftführungskanal eine Ejektorwirkung zustande. Die Kühlluft wird in die Triebwerkgondel getrieben und verhindert eine Umkehrströmung in der Abgasejektordüse, wenn die Triebwerkgondel besonders dicht ist, d.h. der Überdruck in der Gondel nur über den Abgasejektor und nicht über andere Spalte entweicht. Die Dichtigkeit der Triebwerksgondel ist für die Anwendbarkeit der erfindungsgemäßen Vorrichtung und des Verfahrens unbedingt notwendig, da ansonsten der Druck in der Triebwerksgondel nicht über den statischen Druck in der Abgasejektordüse anwachsen kann.

Vorzugsweise ist in der Gebläsezuleitung eine Rückschlagklappe angeordnet. Die Rückschlagklappe ("Flapper-valve") verhindert ein Abströmen der Luft durch das Gebläse durch Rückschlag. Dadurch wird verhindert, dass sich die mit Zapfluft betriebene Turbine ohne Zapfluftausblasung im "Windmilling" mitdreht.

Insbesondere führt die Zapfluftleitung zu mindestens einer Turbine, die mit dem Gebläse gekoppelt ist, und von der aus mindestens eine Turbinenaustrittsleitung aus der Triebwerksgondel herausführt. Die Zapfluft aus dem Niederdruckverdichter wird also über eine kleine Turbine überbord entspannt, welche die in der verdichteten Zapfluft gespeicherte Energie nutzt, um das Gebläse anzutreiben. Das Gebläse kann jedoch auch anders angetrieben werden, beispielsweise durch einen Motor (z. B. Elektromotor, Hydraulikmotor).

Weiterhin besteht die Lösung der Aufgabe in dem Verfahren zum Erzeugen eines Kühlluftstroms in der Triebwerksgondel des Turboproptriebwerks. Mittels der Vorrichtung strömt Umgebungsluft durch den Lufteinlass in den Kühlluftkanal und von dort aus in das Innere der Triebwerksgondel und bildet einen Kühlluftstrom, der innerhalb der Triebwerksgondel an den Triebwerkskomponenten vorbei bis zur Abgasejektordüse strömt und dabei die Triebwerkskomponenten kühlt. Dabei saugt das Gebläse im Bodenleerlaufbetrieb Umgebungsluft aus dem gesonderten Einlass durch die Gebläsezuleitung und bläst diese durch die Gebläseaustrittsleitung in die Düse. Dabei findet keine Erwärmung der Umgebungsluft statt, da der Luftstrahl des Ejektors aus der Umgebungsluft erzeugt wird.

Der Kühlluftstrom füllt also die gesamte Triebwerksgondel aus und kühlt nicht nur einzelne Triebwerkskomponenten, sondern sämtliche Triebwerkskomponenten, die innerhalb der Triebwerksgondel angeordnet sind.

Vorzugsweise wird der Kühlluftstrom aus mehreren Mischströmen erzeugt, indem aus den Düsen der Ejektoren austretende Luftstrahlen mit der Umgebungsluft, die durch die Lufteinlässe in die Kühlluftkanäle strömt, gemischt werden und die Mischströme beim Austritt aus den Kühlluftkanälen mit einander zu dem Kühlluftstrom vereinigt werden.

Die Mischströme führen Umgebungsluft in die Triebwerksgondel, um das Triebwerk zu kühlen. Die Mischströme können im Lastbetrieb und im Bodenleerlaufbetrieb, auch bei Segelstellung der Propeller und bei Rückenwind, nur mit geöffnetem Zapfluftventil erzeugt werden. Dabei wird der Mischstrom direkt mit Zapfluft oder indirekt durch die Gebläseluft erzeugt.

Insbesondere wird im Bodenleerlaufbetrieb mittels des Ejektors ein statischer Druck in der Triebwerksgondel erzeugt, der höher ist als der statische Druck in der Abgasejektordüse. Die Erhöhung des statischen Drucks in der Triebwerksgondel verhindert eine Rückströmung von der Abgasejektordüse in die Triebwerksgondel, wie bereits oben beschrieben.

Vorzugsweise treibt die Zapfluft aus der Zapfluftleitung über die Turbine das Gebläse an und wird danach aus der Triebwerksgondel herausgeleitet. Die Zapfluft wird also auch hier genutzt, um den Kühlluftstrom zu erzeugen, ohne jedoch die Umgebungsluft zu erwärmen.

Im Lastbetrieb tritt aufgrund der Luftströmung außerhalb der Triebwerksgondel Umgebungsluft in den Kühlluftkanal ein, wobei die Ejektorwirkung der Vorrichtung und damit die Ansaugung der Umgebungsluft durch den Kühlluftkanal in Abhängigkeit von dem Regelzustand des Zapfluftventils verringert wird oder entfällt. Die Ejektorwirkung wird also im Lastbetrieb nicht benötigt.

Im Folgenden werden der Stand der Technik und ein Ausführungsbeispiel der Erfindung näher erläutert. Es zeigt:
- Fig. 1: eine schematische Darstellung eines Turboproptriebwerks nach dem Stand der Technik,
- Fig. 2: eine schematische Darstellung des Turboproptrieb- werks mit den erzeugten Strömungen,
- Fig. 3: eine schematische Darstellung des Turbotrieb- werkes mit einer erfindungsgemäßen Ausführungs- form der Vorrichtung und
- Fig. 4: eine Detailansicht der Ausführungsform nach Fig. 3.

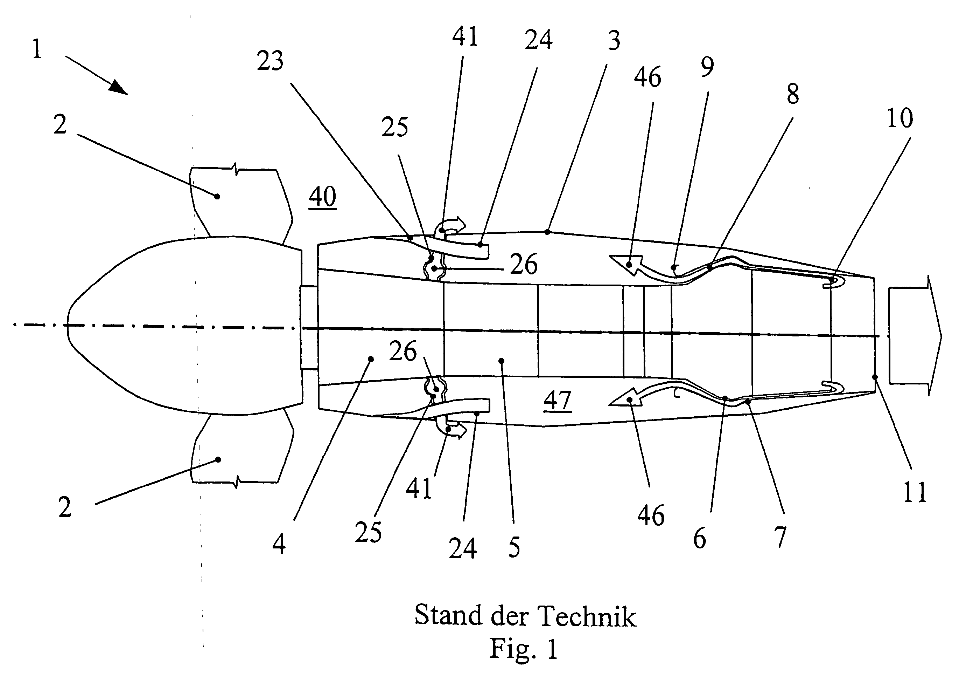

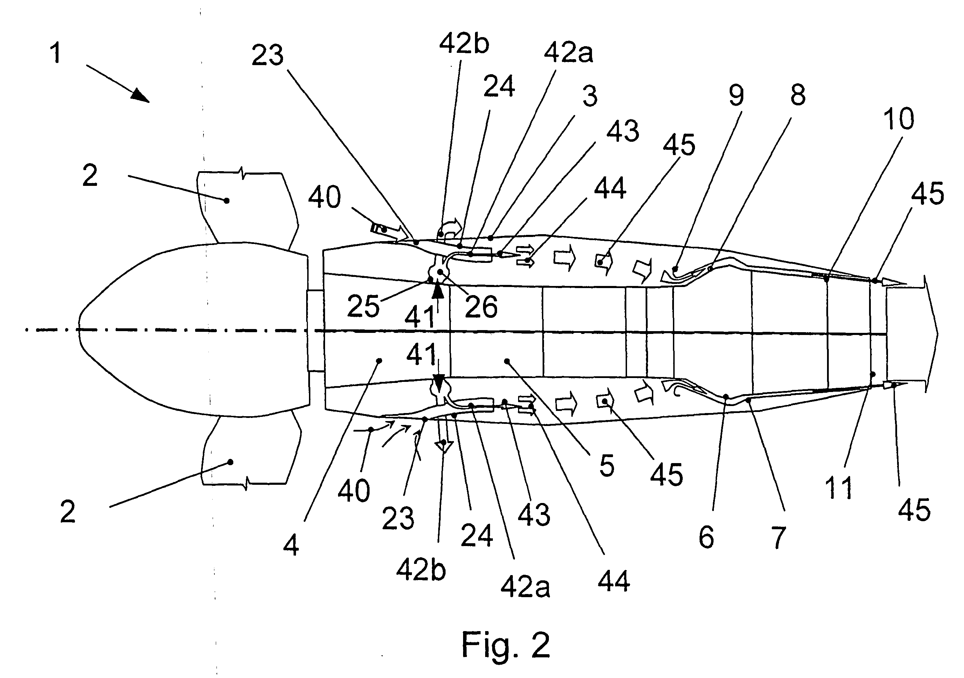

Die Fig. 1 und 2 zeigen jeweils ein Turboproptriebwerk 1 mit Propellerblättern 2, einer Triebwerksgondel 3, einem Niederdruckverdichter 4, einem Hochdruckverdichter 5, einem Turbinengehäuse 6, einem Hitzeschild 7, einer Abgasejektordüse 10 und einer Abgasaustrittsdüse 11.

Die Propellerblätter 2 sind stromauf der Triebwerksgondel 3 angeordnet. Innerhalb der Triebwerksgondel 3 sind der Niederdruckverdichter 4 und der Hochdruckverdichter 5 hintereinander angeordnet.

Das Turbinengehäuse 6 befindet sich im stromab liegenden Teil der Triebwerksgondel 3 und ist von dem Hitzeschild 7 umgeben. Zwischen dem Turbinengehäuse 6 und dem Hitzeschild 7 befindet sich ein Ringspalt 8. An den Hitzeschild 7 schließt sich in Richtung stromauf ein Einlassmund 9 an. Am stromab liegenden Ende des Turbinengehäuses 6 befindet sich die Abgasejektordüse 10. Am stromab liegenden Ende der Triebwerksgondel 3 bildet die Triebwerksgondel 3 mit dem Hitzeschild 7 die Abgasaustrittsdüse 11.

Gemäß Fig. 1 und 2 ist am Umfang der Triebwerksgondel 3 ein Lufteinlass 23 angeordnet. Es können auch mehrere gegebenenfalls gleichmäßig am Umfang der Triebwerksgondel 3 angeordnete Lufteinlässe 23 vorhanden sein. Der Lufteinlass 23 mündet in einen rohrförmigen Kühlluftkanal 24, der im Wesentlichen axial in Richtung der Abgasejektordüse 10 und der Abgasaustrittsdüse 11 in die Triebwerksgondel 3 hineinragt.

Vom stromab liegenden Ende des Niederdruckverdichters 4 zweigt eine Zapfluftleitung 25 mit einem Zapfluftventil 26 ab.

In Fig. 1 ist ein Turboproptriebwerk 1 nach dem Stand der Technik dargestellt. Bei solchen Turboproptriebwerken wird in bestimmten Betriebsbereichen, insbesondere beim Bodenleerlaufbetrieb, Zapfluft 41 durch die Zapfluftleitung 25 und das Zapfluftventil 26 hindurch aus der Triebwerksgondel 3 herausgeführt, um zu vermeiden, dass es im Hochdruckverdichter 5 zum Strömungsabriss beim Erreichen der Pumpgrenze kommt.

Im Lastbetrieb oder im Bodenleerlaufbetrieb mit größerem Propelleranstellwinkel strömt Umgebungsluft 40 durch den Lufteinlass 23 in die Triebwerksgondel 3 hinein und kühlt die nicht dargestellten Triebwerkskomponenten. Dabei ist der Gesamtdruck in der Triebwerksgondel p_{tNa} (Na: engl. nacelle) in der Triebwerksgondel 3 kleiner als der Gesamtdruck p_{tamb} (amb: engl. ambient air) der Umgebungsluft 40 und größer als der statische Druck p_{sNo} (No: engl. nozzle) an der Abgasejektordüse 10. Dabei ist die Abgasejektordüse 10 wirksam.

Im Bodenleerlaufbetrieb mit negativer oder geringer positiver Propellerstellung, bei Rückenwind oder bei Propellersegelstellung tritt keine Umgebungsluft 40 durch den Lufteinlass 23 in den rohrförmigen Kühlluftkanal 24 ein, so dass kein Kühlluftstrom entsteht, sondern das Luftvolumen 47 in der Triebwerksgondel 3 stationär bleibt. Der Gesamtdruck p_{tNa} in der Triebwerksgondel 3 ist dabei kleiner als der statische Druck P_{sNs} an der Abgasejektordüse 10. Der statische Druck p_{sNo} an der Abgasejektordüse 10 ist wiederum größer als der Gesamtdruck p_{tamb} der Umgebungsluft 40. Dadurch entsteht eine Rückströmung 46, die das Abgas von der Abgasejektordüse 10 in die Triebwerksgondel 3 führt. Die Abgasejektordüse 10 ist also in diesen Betriebszuständen unwirksam.

Fig. 2 zeigt schematisch die in der Triebwerksgondel 3 des Turboproptriebwerks 1 erzeugten Strömungen. Die obere Hälfte der Fig. 2 zeigt die Strömungen im Lastbetrieb (Flugbetrieb), und die untere Hälfte zeigt die Strömungen im Bodenleerlaufbetrieb bzw. bei Rückenwind.

Aus dem Niederdruckverdichter 4 wird Zapfluft 41 entnommen. Die Zapfluft 41 strömt durch die Zapfluftleitung 25 und das Zapfluftventil 26 und wird hinter dem Zapfluftventil 26 in einen ersten Teilstrom 42a und einen zweiten Teilstrom 42b aufgeteilt. Der erste Teilstrom 42a wird in den Kühlluftkanal 24 geleitet und bildet einen Luftstrahl 43. Der zweite Teilstrom 42b wird aus der Triebwerksgondel 3 herausgeführt.

Im Lastbetrieb oder im Leerlaufbetrieb während des Fluges und auch bei der Drosselung der Triebwerksleistung (obere Hälfte der Fig. 2) strömt Umgebungsluft 40 als Stauluft selbständig durch den am Umfang der Triebwerksgondel 3 vorhandenen Lufteinlass 23 in den im Innern der Triebwerksgondel 3 angeordneten Kühlluftkanal 24. Die Umgebungsluft 41 wird im Kühlluftkanal 24 mit dem aus dem ersten Teilstrom 42a der Zapfluft 41 gebildeten Luftstrahl 43 zu einem Mischstrom 44 vermischt.

Im Bodenleerlaufbetrieb und bei Rückenwind (untere Hälfte der Fig. 2) erzeugt der in den Kühlluftkanal 24 eintretende, aus der Zapfluft 41 gebildete Luftstrahl 43 im Kühlluftkanal 24 eine Ansaugwirkung, durch die Umgebungsluft 40 durch den Lufteinlass 23 in den Kühlluftkanal 24 gesaugt wird. Dabei vermischt sich auch in diesen Betriebszuständen der Luftstrahl 43 mit der Umgebungsluft 40 und bildet einen Mischstrom 44.

Es können auch mehrere Ejektoren 21 gegebenenfalls gleichmäßig am Umfang der Triebwerksgondel 3 verteilt angeordnet sein, die mehrere Mischströme 44 erzeugen. Dann vereinigen sich in allen Betriebszuständen die in Umfangsrichtung in der Triebwerksgondel 3 verteilten Mischströme 44 stromab zu einem Kühlluftstrom 45. Der Kühlluftstrom 45 strömt an nicht dargestellten Triebwerkskomponenten vorbei und kühlt diese. Der Kühlluftstrom 45 strömt anschließend durch den Einlassmund 9 in den Ringspalt 8 zwischen dem Turbinengehäuse 6 und dem Hitzeschild 7, um auch diese Bereiche zu kühlen. Anschließend wird der Kühlluftstrom 45 an der Abgasejektordüse 10 vorbei geleitet und von dort aus durch die Abgasaustrittsdüse 11 ins Freie geführt. Im Bodenbetrieb und bei Rückenwind (untere Hälfte der Fig. 2) wird die Unwirksamkeit der Abgasejektordüse 10 durch den Kühlluftstrom 45 kompensiert, da das Druckgefälle im Turboproptriebwerk 1 durch die Vorrichtung positiv ist (p_{tNa} > p_{sNo} > p_{tamb}).

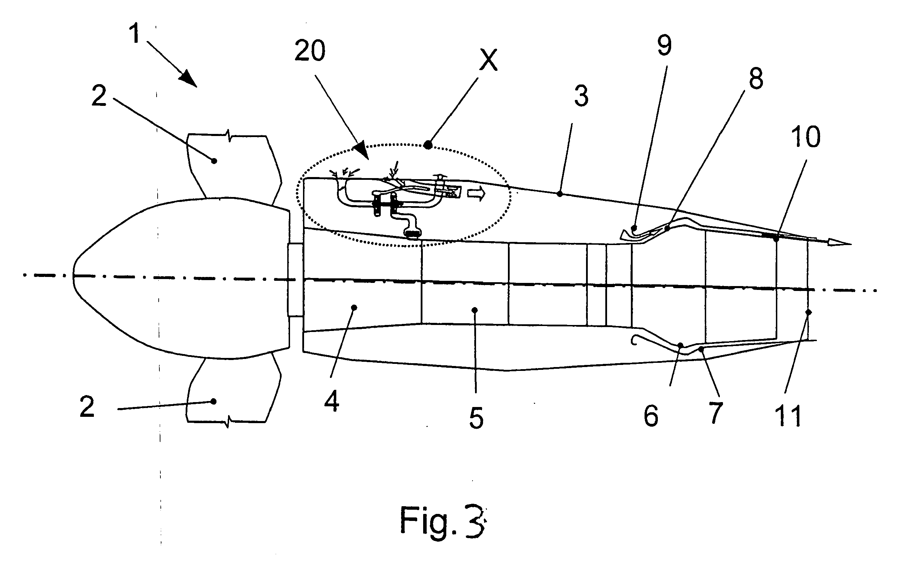

Zur Erzeugung des Kühlluftstroms 45 im Bodenleerlaufbetrieb bzw. bei Rückenwind wird in der Triebwerksgondel 3 eine Vorrichtung 20 mit einem oder mehreren Ejektoren 21 verwendet, die in Fig. 3 im Detail dargestellt ist.

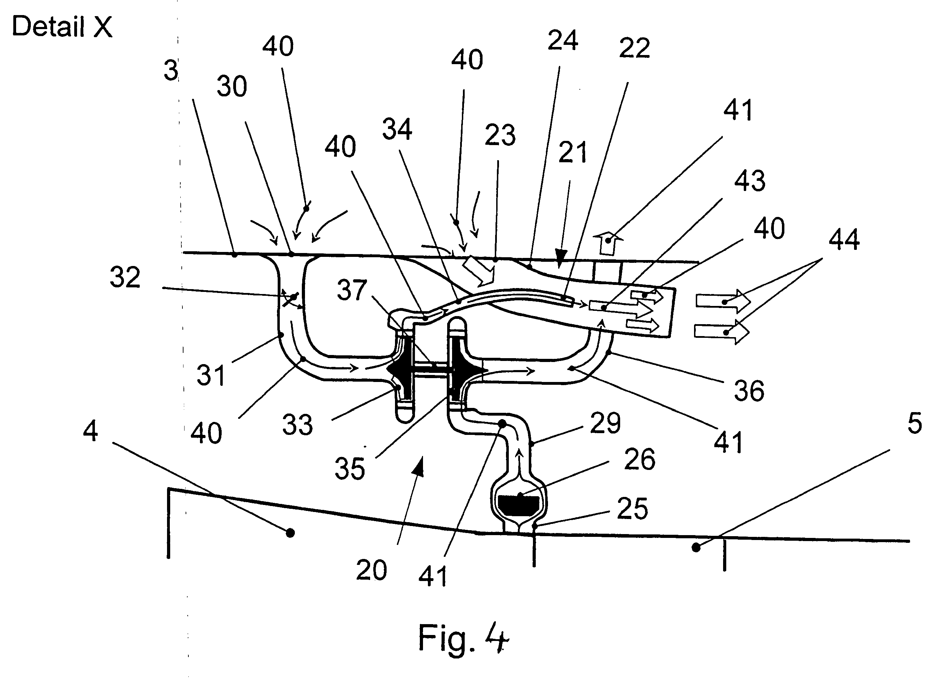

In Fig. 3 ist ein Turboproptriebwerk 1, das bereits oben beschrieben wurde, mit der erfindungsgemäßen Ausführungsform der Vorrichtung 20 schematisch dargestellt. Der Ausschnitt X ist in Fig. 4 als Detailansicht dargestellt. In Fig. 4 sind die Triebwerksgondel 3, der Niederdruckverdichter 4 und der Hochdruckverdichter 5 andeutungsweise dargestellt. Die Vorrichtung 20 umfasst im Wesentlichen einen Ejektor 21, eine Turbine 35 und ein Gebläse 33. Bei Verwendung von mehreren Ejektoren 21 entspricht die Anzahl der Ejektoren 21 der Anzahl der Zapfluftventile 26.

Die Zapfluftleitung 25 umfasst das Zapfluftventil 26. Stromab des Zapfluftventils 26 bildet die Zapfluftleitung 25 eine Ejektordüsenzuleitung 28, die zur Turbine 35 führt. Bei Verwendung von mehreren Ejektoren 21 sind die zugehörigen Turbinen 35 in Umfangsrichtung in Abhängigkeit von der Anzahl der Zapfluftventile 26 und des Raumangebotes innerhalb der Triebwerksgondel 3 gegebenenfalls gleichmäßig verteilt. An dem Austritt der Turbine 35 ist eine Turbinenaustrittsleitung 36 angeschlossen. Die Turbinenaustrittsleitung 36 führt aus der Triebwerksgondel 3 heraus ins Freie.

Das Gebläse 33 ist jeweils über eine Welle 37 mit einer Turbine 35 gekoppelt. Der Einlass des Gebläses 33 ist über eine Gebläsezuleitung 31 mit einem gesonderten Einlass 30 in der Triebwerksgondel 3 verbunden. In der Gebläsezuleitung 31 befindet sich eine Rückschlagklappe 32. An den Austritt des Gebläses 33 ist eine Gebläseaustrittsleitung 34 angeschlossen. Am Ende der Gebläseaustrittsleitung 34 ist eine Düse 22 angebracht. Die Gebläseaustrittsleitung 34 führt in einen Kühlluftkanal 24 hinein, so dass die Düse 22 der Gebläseaustrittsleitung 34 je nach Querschnittsform konzentrisch oder mittig im Kühlluftkanal 24 angeordnet ist. Bei Verwendung von mehreren Ejektoren 21 sind innerhalb der Triebwerksgondel 3 außerdem in Umfangsrichtung in Abhängigkeit der Anzahl der Turbinen 35 Gebläse 33 angeordnet. Der Ejektor 21 ist aus der Düse 22 und dem Kühlluftkanal 24 gebildet.

Bei geöffnetem Zapfluftventil 26 strömt die Zapfluft 41 durch die Zapfluftleitung 25 und das Zapfluftventil 26 in die Turbinenzuleitung 29 zu der Turbine 35 und treibt die Turbine 35 an. Anschließend wird die Zapfluft 41 durch die Turbinenaustrittsleitung 36 aus der Triebwerksgondel 3 heraus ins Freie geleitet.

Die Turbine 35 treibt über die Welle 37 das Gebläse 33 an. Dieses Gebläse 33 saugt durch den gesonderten Einlass 30 und über die Gebläsezuleitung 31 Umgebungsluft 40 an. Die angesaugte Umgebungsluft 40 wird vom Gebläse 33 in die Gebläseaustrittsleitung 34 und in die Düse 22 geblasen.

Der in der Düse 22 erzeugte Luftstrahl 43 erzeugt in dem die Düse 22 umgebenden Kühlluftkanal 24 eine Ejektorwirkung, durch die Umgebungsluft 40 durch den Lufteinlass 23 in den Kühlluftkanal 24 gesaugt wird. Die angesaugte Umgebungsluft 40 vermischt sich beim Austritt aus dem Kühlluftkanal 24 mit dem Luftstrahl 43 aus der Düse 22 der Gebläseaustrittsleitung 34 und bildet einen Mischluftstrom 44. Bei Verwendung von mehreren Ejektoren 21 vereinigen sich die einzelnen aus den Ejektoren 21 austretenden Mischströme 44 stromab zu dem Kühlluftstrom 45 (vgl. Fig. 2).

Im Lastbetrieb (Flugbetrieb) bei geschlossenem Zapfluftventil 26 entfällt die Ejektorwirkung. Dann strömt die Umgebungsluft 40 selbstständig (ohne Ansaugung) durch den Lufteinlass 23 in den Kühlluftkanal 24. Die Rückschlagklappe 32 in der Gebläsezuleitung 31 schließt sich, um durch Rückschlag zu vermeiden, dass durch die statische Druckabsenkung am Lufteinlass 23 über die Düse 22 im Kühlluftkanal 24 Kühlluft absaugt. Die Druckabsenkung wird durch die erhöhte Fluggeschwindigkeit und der damit verbundenen Strömungsgeschwindigkeit um das Triebwerk herum, an den Lufteinlässen vorbei, erzeugt.

Dabei kehrt sich das Druckverhältnis vom statischem Druck p_{sNo} (No: engl. nozzle) zum Gesamtdruck in der Triebwerksgondel 3 p_{tNa} (Na: engl. nacelle) wieder um. Dabei ist der statische Druck p_{sNo} wieder geringer als der Gesamtdruck in der Triebwerksgondel 3 p_{tNa} und die Abgasejektordüse 10 funktioniert wieder. Der zapfluftgestütze Ejektor 21 wird dabei theoretisch nicht mehr benötigt, aber unterstützt die zusätzliche Kühlluftzufuhr bis ab einer gewissen Triebwerksdrehzahl die Zapfluftventile kreisprozessbedingt vollständig schließen und in dem Kühlluftkanal keine Ejektorwirkung mehr erzeugt wird. Die Kühlung des Triebwerks geschieht dann wieder durch Stauluftzuführung oder Ansaugung, solange bis die Zapfluftventile wieder öffnen und die Kühlluftversorgung durch die Zapfluft unterstützt wird.

### Bezugszeichenliste

- 1: Turboproptriebwerk
- 2: Propellerblatt
- 3: Triebwerksgondel
- 4: Niederdruckverdichter
- 5: Hochdruckverdichter
- 6: Turbinengehäuse
- 7: Hitzeschild
- 8: Ringspalt
- 9: Einlassmund
- 10: Abgasejektordüse
- 11: Abgasaustrittsdüse
- 20: Vorrichtung
- 21: Ejektor
- 22: Düse
- 23: Lufteinlass
- 24: Kühlluftkanal
- 25: Zapfluftleitung
- 26: Zapfluftventil
- 28: Ejektordüsenzuleitung
- 29: Turbinenzuleitung
- 30: gesonderter Einlass
- 31: Gebläsezuleitung
- 32: Rückschlagklappe
- 33: Gebläse
- 34: Gebläseaustrittsleitung
- 35: Turbine
- 36: Turbinenaustrittsleitung
- 37: Welle
- 40: Umgebungsluft
- 41: Zapfluft
- 42a: erster Teilstrom
- 42b: zweiter Teilstrom
- 43: Luftstrahl
- 44: Mischstrom
- 45: Kühlluftstrom
- 46: Rückströmung
- 47: Luftvolumen

## Patentansprüche

1. Turboproptriebwerk (1) mit einer Vorrichtung (20) zum Erzeugen eines Kühlluftstroms (45), mit einer Triebwerksgondel (3) und mit mindestens einer Zapfluftleitung (25), wobei die Vorrichtung mindestens einen Ejektor (21) aufweist, der aus einem Kühlluftkanal (24) und einer Düse (22) gebildet ist, der zum Ejektor (21) gehörige Kühlluftkanal (24) mindestens einen am Umfang der Triebwerksgondel (3) angeordneten Lufteinlass (23) mit dem Innern der Triebwerksgondel (3) verbindet und in dem Kühlluftkanal (24) mindestens eine Düse (22) angeordnet ist, **dadurch gekennzeichnet,**
**dass** der Ejektor (21) innerhalb der Triebwerksgondel (3) im vorderen Bereich des Turboproptriebwerkes (1) und die Zapfluftleitung (25) am Niederdruckverdichter (4) angeordnet sind und dass ein gesonderter Einlass (30) in der Triebwerksgondel (3) vorgesehen ist, der über mindestens eine Gebläsezuleitung (31) zu mindestens einem Gebläse (33) führt, von dem aus eine Gebläseaustrittsleitung (34) zur Düse (22) des Ejektors (21) führt.

2. Turboproptriebwerk (1) nach Anspruch 1, **dadurch dadurch gekennzeichnet, dass** din der Gebläsezuleitung (31) eine Rückschlagklappe (32) angeordnet ist.

3. Turboproptriebwerk (1) nach Anspruch 1, **dadurch gekennzeichnet, dass** die Zapfluftleitung (25) zu mindestens einer Turbine (35) führt, die mit dem Gebläse (33) gekoppelt ist, und von der aus mindestens eine Turbinenaustrittsleitung (36) aus der Triebwerksgondel (3) herausführt.

4. Verfahren zum Erzeugen eines Kühlluftstroms (45) in der Triebwerksgondel des Turboproptriebwerks (1) nach einem der Ansprüche 1 bis 3, wobei mittels der Vorrichtung (20) Umgebungsluft (40) durch den Lufteinlass (23) in den Kühlluftkanal (24) und von dort aus in das Innere der Triebwerksgondel (3) strömt und einen Kühlluftstrom (45) bildet, der innerhalb der Triebwerksgondel (3) an den Triebwerkskomponenten vorbei bis zur Abgasejektordüse (10) strömt un dabei die Triebwerkskomponenten kühlt, **dadurch gekennzeichnet, dass** das Gebläse (31) im Bodenleerlaufbetrieb Umgebungsluft (40) aus dem geonderten Einlasse (30) durch die Gebläsezuleitung (31) saugt und durch die Gebläseaustrittsleitung (34) in die Düse (32) bläst.

5. Verfahren nach Anspruch 4, **dadurch gekennzeichnet, dass** der Kühlluftstrom (43) aus mehreren Mischströmen (44) erzeugt wird, indem aus den Düsen (22) der Ejektoren (21) austretende Luftstrahlen (43) mit der Umgebungsluft (40), die durch die Lufteinlässe (23) in die Kühlluftkanäle (24) strömt, gemischt werden und die Mischströme (44) beim Austritt aus den Kühlluftkanälen (24) mit einander zu dem Kühlluftstrom (45) vereinigt werden.

6. Verfahren nach Anspruch 4, **dadurch gekennzeichnet, dass** die Zapfluft (41) aus der Zapfluftleitung (25) über die Turbine (35) das Gebläse (33) antreibt und danach aus der Triebwerksgondel (3) herausgeleitet wird.

7. Verfahren nach Anspruch 4, **dadurch gekennzeichnet, dass** im Lastbetrieb aufgrund der Luftströmung außerhalb der Triebwerksgondel (3) Umgebungsluft (40) in den Kühlluftkanal (24) eintritt, wobei die Ejektorwirkung der Vorrichtung (20) und damit die Ansaugung der Umgebungsluft (40) durch den Kühlluftkanal (24) in Abhängigkeit von dem Regelzustand des Zapfluftventils verringert wird oder entfällt.

## Claims

1. Turboprop engine (1) with an apparatus (20) for the generation of a cooling airflow (45), an engine nacelle (3) and at least one bleed air line (25), with the apparatus having at least one ejector (21) formed by a cooling air duct (24) and a nozzle (22), with the cooling air duct (24) appertaining to the ejector (21) connecting at least one air intake (23) disposed on the periphery of the engine nacelle (3) with the interior of the engine nacelle (3) and with at least one nozzle (22) being arranged in the cooling air duct (24), **characterized in that** the ejector (21) is arranged within the engine nacelle (3) in the forward part of the turboprop engine (1), that the bleed air line (25) is arranged on the low-pressure compressor (4) and that a separate intake (30) is provided in the engine nacelle (3), leading via at least one fan inlet line (31) to at least one fan (33), from which a fan outlet line (34) leads to the nozzle (22) of the ejector (21).

2. Turboprop engine (1) in accordance with Claim 1, **characterized in that** a non-return flap (32) is arranged in the fan inlet line (31).

3. Turboprop engine (1) in accordance with Claim 1, **characterized in that** the bleed air line (25) leads to at least one turbine (35), which is coupled to the fan (33) and from which at least one turbine outlet line (36) is routed out of the engine nacelle (3).

4. Method for the generation of a cooling airflow (45) in the nacelle of the turboprop engine (1) in accordance with one of the Claims 1 to 3, with ambient air (40) flowing through the air intake (23) into the cooling air duct (24) by way of the apparatus (20) and from there into the interior of the engine nacelle (3), forming a cooling airflow (45) which passes within the engine nacelle (3) along the engine components to the exhaust ejector nozzle (10), thereby cooling the engine components, **characterized in that** in ground idle operation the fan (33) aspirates ambient air (40) from the separate intake (30) through the fan inlet line (31) to deliver it through the fan outlet line (34) into the nozzle (22).

5. Method in accordance with Claim 4, **characterized in that** the cooling airflow (45) is generated from several mixed flows (44) **in that** the air jets (43) issuing from the nozzles (22) of the ejectors (21) are mixed with the ambient air (40) flowing through the air intakes (23) into the cooling air ducts (24), and the mixed flows (44), upon leaving the cooling air ducts (24), are brought together, to form the cooling airflow (45).

6. Method in accordance with Claim 4, **characterized in that** the bleed air (41) from the bleed air line (25) drives the fan (33) via the turbine (35) and is afterwards discharged from the engine nacelle (3).

7. Method in accordance with Claim 4, **characterized in that** under load the airflow outside of the engine nacelle (3) causes ambient air (40) to enter the cooling air duct (24), with the ejector effect of the apparatus (20), and thus the aspiration of ambient air (40) through the cooling air duct (24) being reduced or terminated in dependence of the control state of the bleed air valve.

## Revendications

1. Turbopropulseur (1) avec un dispositif (20) pour créer un flux d'air de refroidissement (45), une nacelle (3) et au moins une conduite d'air de purge (25), sachant que le dispositif présente au moins un éjecteur (21) constitué d'un canal d'air de refroidissement (24) et d'une buse (22), que le canal d'air de refroidissement (24) appartenant à l'éjecteur (21) relie au moins une prise d'air (23) disposée sur le pourtour de la nacelle (3) avec l'intérieur de la nacelle (3), et qu'au moins une buse (22) est disposée dans le canal d'air de refroidissement (24), **caractérisé en ce que** l'éjecteur (21) est disposé à l'intérieur de la nacelle (3) dans la partie antérieure du turbopropulseur (1) et la conduite d'air de purge (25) est placée sur le compresseur basse pression (4), et qu'est prévue dans la nacelle (3) une entrée (30) distincte qui, via au moins une conduite d'amenée de la soufflante (31) mène à au moins une soufflante (33) depuis laquelle une conduite de sortie de soufflante (34) mène à la buse (22) de l'éjecteur (21).

2. Turbopropulseur (1) selon la revendication n° 1, **caractérisé en ce qu'**un clapet antiretour (32) est disposé dans la conduite d'amenée de la soufflante (31).

3. Turbopropulseur (1) selon la revendication n° 1, **caractérisé en ce que** la conduite d'air de purge (25) mène à au moins une turbine (35) qui est couplée avec la soufflante (33) et depuis laquelle au moins une conduite de sortie de turbine (36) mène hors de la nacelle (3).

4. Procédé pour créer un flux d'air de refroidissement (45) dans la nacelle du turbopropulseur (1) selon une des revendications n° 1 à n° 3, dans lequel au moyen du dispositif (20), de l'air ambiant (40) s'écoule à travers la prise d'air (23) dans le canal d'air de refroidissement (24) et de là dans l'intérieur de la nacelle (3), et forme un flux d'air de refroidissement (45) qui s'écoule à l'intérieur de la nacelle (3) le long des composants du turbopropulseur jusqu'à la buse de gaz d'échappement (10) en refroidissant les composants du turbopropulseur, **caractérisé en ce qu'**en fonctionnement au ralenti au sol, la soufflante (33) aspire de l'air ambiant (40) depuis l'entrée (30) distincte à travers la conduite d'amenée de la soufflante (31) et l'insuffle dans la buse (22) à travers la conduite de sortie de la soufflante (34).

5. Procédé selon la revendication n° 4, **caractérisé en ce que** le flux d'air de refroidissement (45) est constitué de plusieurs flux mixtes (44) par mélange des jets d'air (43) sortant des buses (22) des éjecteurs (21) avec l'air ambiant (40) qui s'écoule à travers les prises d'air (23) dans les canaux d'air de refroidissement (24), et par réunion des flux mixtes (44) entre eux à la sortie des canaux d'air de refroidissement (24) pour former le flux d'air de refroidissement (45).

6. Procédé selon la revendication n° 4, **caractérisé en ce que** l'air de purge (41) venant de la conduite d'air de purge (25) entraîne la soufflante (33) par l'intermédiaire de la turbine (35) et est ensuite acheminé hors de la nacelle (3).

7. Procédé selon la revendication n° 4, **caractérisé en ce qu'**en fonctionnement sous charge, de l'air ambiant (40) entre dans le canal d'air de refroidissement (24) en raison de l'écoulement de l'air à l'extérieur de la nacelle (3), sachant qu'en fonction de l'état de réglage de la vanne de purge, l'effet d'éjection du dispositif (20) et donc l'aspiration de l'air ambiant (40) à travers le canal d'air de refroidissement (24) sont réduits ou supprimés.
